# EUROPEAN PATENT SPECIFICATION

(11) **EP 0 794 161 B1**
(45) Date of publication and mention of the grant of the patent: **12.02.2003**
(21) Application number: 96922049.0
(22) Date of filing: 16.07.1996
(51) Int. Cl.: C04B 35/66, C04B 33/13

(54) **PROCESS FOR PRODUCING HEAT-ACCUMULATOR CERAMIC BLOCKS FROM RED CLAYS OF THE BAYER PROCESS**
VERFAHREN ZUR HERSTELLUNG VON WÄRMESPEICHERNDEN KERAMISCHEN BLÖCKEN VON ROTEM TON DES BAYERVERFAHRENS
PROCEDE D'OBTENTION DE BLOCS CERAMIQUES ACCUMULATEURS DE CHALEUR A PARTIR D'ARGILES ROUGES DU PROCEDE BAYER

(30) Priority: 19.09.1995 ES 9501810
(43) Date of publication of application: 10.09.1997
(73) Proprietor: UNIVERSIDADE DE SANTIAGO DE COMPOSTELA, 15705 Santiago de Compostela (ES)
(72) Inventor: GUITIAN RIVERA, Francisco Universidade de, E-15706 Santiago de Compostela (ES); CONDE-PUMPIDO TOURON, Rogelio Universidade de, E-15706 Santiago de Compostela (ES); de AZA PENDAS, Salvador Universidade de Santiago, E-15706 Santiago de Compostela (ES); MOYA CORRAL, José Serafin Universidade de, E-15706 Santiago de Compostela (ES)
(74) Representative: Davila Baz, Angel
(86) International application number: ES9600148
(87) International publication number: WO97011041

(56) References cited:
- EP-A- 0 318 305
- FR-A- 2 592 036
- JOURNAL OF THE AUSTRALIAN CERAMIC SOCIETY, vol. 11, No. 2, November 1975, pages 42-45, XP002019009 PEPPLINKHOUSE H.J. ET AL.: Acoustic tiles from solid wastes"
- JOURNAL OF MATERIALS SCIENCE, Vol. 21, 1986, pages 2179-2184, XP002019010 KNIGHT J.C. ET AL.: "The mechanical properties from bauxite waste"

## Description

Manufacturing procedure to obtain high density ceramic bricks for electric thermal storage heaters (ETS) through red muds processing.
A high concentration soda (NaOH) solution added when alumina undergoes the Bayer process, in high temperature and pressure conditions. This process originates huge amounts of metallic hydroxides and other insoluble minerals. These products are known as red mud and their average composition is shown in tables 1 and 2.

Millions of Tons of these residues are produced every year. This environmental hazard makes them desirable to be used in whichever industrial process.

**Table 1.-**

| **Mineralogical composition of red muds** | |
|---|---|
| Hematite | 30-35% |
| Rutile | 20% |
| Aluminium Oxidroxides | 30-40% |

On the other hand, raw materials used in commercial ETS bricks are Fe oxides richclays, prereduced Fe oxides and magnesites.

**Table 2.-**

| **Chemical analysis of red muds** | | |
|---|---|---|
| SiO2=6,1% | TiO2=22,6% | Na2O=4,70% |
| Al2O3=20,1% | CaO=4,8% | K2O=0,10% |
| Fe2O3=31,8% | MgO=0,2% | PO=9,50% |

Both raw materials and fabrication procedure determine the properties of the ETS bricks (Table 3). High thermal capacity, good thermal shock behaviour, high density and reasonable price are desired.

**Table 3.-**

| **Properties of other commonly used ETS bricks** | | | |
|---|---|---|---|
| Composition | Density gr/cc | Porosity | Specific Heat |
| Dense Clay | 2.0 | 20% | 0.19Kcal/Kg.°C |
| Magnesite | 2.8 | 22% | 0.25Kcal/Kg.°C |
| Ferric Oxide I | 3.8 | 15-25% | 0.22Kcal/Kg.°C |
| Ferric Oxide II | 3.7 | 20% | 0.22Kcal/Kg.°C |

EP 0 318 305 discloses a process for producing a refractory material, in which a binding agent and/or an additive (silica, alumina, sodium salts, cryolite, aluminate, aluminium) is added to red mud. The obtained material is useful as corrosion-resistant refractories in refractory - linings and similar applications.

This innovative method allows to obtain materials with appropriate characteristics (see table 3). This process fulfills two purposes a) use and elimination of the red mud, for an industrial application. b) substitution of more expensive raw materials which are applicable to other cases.

This procedure can be separated in three stages :
1- Red mud with low residual humidity is extruded or pelletized to obtain particles with adequate size distribution. Then they are dried and prefired at high temperature (900°C-1300°C). This firing causes chemical and structural transformations that leads mechanical and chemical stability in the grog. The main phases present in the fired material are hematite, aluminum titanate, iron and a variable composition glass. If firing is carried out in reducing conditions, changing amounts of magnetite are formed.
2- The grog and the granules are mixed with little amounts of binder (, red mud, ) this mixture can be shaped by pressing, extrusion, or any other process. Some water can be added to obtain the required plasticity.
3- The obtained blocks are dried and fired at 900°C to 1300°C

### Example 1

Red mud from Alumina Aluminio S.A. (San Ciprián, Lugo) with 5% humidity is shaped into particles of sizes between 0 - 2 mm., dried at 120°C and then fired at 1100°C far an hour to obtain the grog.

Then this grog is mixed with 10% of raw red muds, to achieve a homogeneous bulk. This bulk is pressed at 550Kg/cm2 in a steel matrix of 200x100x 50mm., and then released from the mold. The blocks are dried and fired at 1100°C for four hours. The features of the resulting material are shown in table 4.

**Table 4.-**

| **Properties of red mud bricks.** | |
|---|---|
| Density | 3.4gr/cc |
| Porosity | 18% |
| Compression strength | 350Kg/cm2 |
| Thermal shock behaviour | Good |
| Specific Heat | 0.22 Kcal/Kg.°C |

## Claims

1. Process for obtaining high density ceramic bricks for electric thermal storage heaters from red muds of the Bayer process, **characterised in that** it comprises the stages of precalcinating at 900 to 1300° C and granulating said red muds; mixing said calcinated muds with raw red muds and water as sole plasticizer or additive; shaping the mixture into bricks; and firing the obtained bricks at 900°C to 1300°C.

2. Process according to claim 1, **characterised in that** the step of granulating is carried out by pelletization, extrusion, grinding, or any other industrial process.

## Patentansprüche

1. Verfahren zur Herstellung von keramischen Ziegeln hoher Dichte für elektrische Wärmespeicher-Heizgeräte aus Rotschlamm aus dem Bayerverfahren, **dadurch gekennzeichnet, dass** es die folgenden Schritte umfasst: Präkalzinieren des Rotschlammes bei 900°C bis 1300°C und Granulieren desselben Rotschlammes; Mischen desselben kalzinierten Schlammes mit rohem Rotschlamm und Wasser als einzigem Weichmacher oder Additiv; Formen des Gemisches zu Ziegeln; und Brennen der so erhaltenen Ziegel bei 900°C bis 1300°C.

2. Verfahren nach Anspruch 1, **dadurch gekennzeichnet, dass** der Schritt des Granulierens durch Pelletierung, Extrusion, Zermahlen, oder andere industrielle Verfahren ausgeführt wird.

## Revendications

1. Procédé d'obtention de briques céramiques de haute densité pour appareils de chauffage électrique à accumulation thermique à partir de boues rouges résultant du procédé de Bayer, **caractérisé en ce qu'**il comprend les étapes de précalciner de 900°C à 1300°C et granuler lesdites boues rouges; mélanger lesdites boues calcinées avec des boues rouges brutes et de l'eau comme unique plastifiant ou additif; donner forme au mélange en des briques; et cuire les briques obtenues de 900°C à 1300°C.

2. Procédé selon revendication 1, **caractérisé en ce que** l'étape de granulation est réalisée par pelletisation, extrusion, meulage, ou tout autre procédé industriel.
